# DEMANDE DE BREVET EUROPEEN

(11) **EP 1 528 313 A2**
(43) Date de publication de la demande: **04.05.2005**
(21) Numéro de dépôt: 04292526.3
(22) Date de dépôt: 25.10.2004
(51) Int. Cl.: F21V 7/00, F21V 14/08, F21V 11/16

(54) **Projecteur pour véhicule automobile comportant une source lumineuse formée par une lampe à décharge.**

(30) Priorité: 31.10.2003 FR 0312836
(71) Demandeur: VALEO VISION, 93012 Bobigny Cédex (FR)
(72) Inventeur: de Lamberterie, Antoine, 75019 Paris (FR); Meyrenaud, Jean-Luc, 93190 Livry Gargan (FR); Huleux, Aurélie, 89100 Sens (FR); Ravier, Jean-Paul, 94100 Saint Maur (FR)

(57) **Abrégé**

Projecteur comportant un premier réflecteur ellipsoïdal (2) et une lampe à décharge (3) disposée de manière à émettre de la lumière essentiellement vers le haut. Le premier réflecteur ellipsoïdal (2) est prévu principalement en arrière de la lampe à décharge (3) ; une lentille (4) est placée en avant de ce réflecteur ;un deuxième réflecteur ellipsoïdal (6) est prévu au-dessus de la lampe à décharge (3) pour former une image de cette lampe qui constitue une source lumineuse secondaire virtuelle (7) située en avant de la lampe à décharge, au voisinage du plan horizontal passant par l'axe géométrique de la lampe, et éclairant vers le bas ; et un réflecteur verticalisé (8) est disposé en partie basse pour produire, à partir du faisceau provenant de la source secondaire virtuelle (7), un faisceau de longue portée qui n'est pas intercepté par la lentille (4), tandis que l'ensemble du premier réflecteur ellipsoïdal (2) et de la lentille (4) donne un faisceau étalé de plus faible portée, l'axe géométrique de la lampe à décharge (3) et l'axe optique du projecteur faisant un angle non nul.

## Description

L'invention est relative à un projecteur, pour véhicule automobile, du genre de ceux qui comportent un premier réflecteur, de type ellipsoïdal, et une source lumineuse formée par une lampe à décharge placée au voisinage du foyer interne de ce réflecteur, l'axe géométrique de la lampe à décharge étant situé dans un plan horizontal et la lampe étant disposée de manière à émettre de la lumière essentiellement vers le haut.

Des projecteurs de technologie elliptique assurant une fonction de type code (feux de croisement) et utilisant une lampe à décharge sont connus. Ils ont le défaut de présenter une profondeur, c'est-à-dire une dimension suivant la direction de l'axe optique du projecteur, importante, supérieure à 100 mm. A cette profondeur, il faut ajouter généralement la profondeur de la connexion électrique de la lampe disposée suivant l'axe optique.

D'après le document EP-A-0 933 585, on connaît un projecteur à source transversale avec réflecteur verticalisé. L'expression "réflecteur verticalisé" désigne un réflecteur s'étendant principalement sur la direction verticale et dont la surface est déterminée pour réfléchir suivant une direction sensiblement horizontale des rayons lumineux provenant de la source située au voisinage du foyer du réflecteur. Un tel projecteur, qui présente une profondeur relativement faible, permet d'obtenir un faisceau de portée satisfaisante suivant l'axe optique du projecteur, mais l'éclairage des bas côtés de la route demande à être amélioré.

L'invention a pour but, surtout, de fournir un projecteur lumineux à lampe à décharge permettant d'assurer une fonction code ou une fonction code et route avec une profondeur inférieure à celle des systèmes de type elliptique, de préférence inférieure à 100 mm, une largeur inférieure à celle des projecteurs à surfaces complexes, tout en assurant une portée satisfaisante et un bon éclairage des bas côtés. Il est souhaitable que le projecteur reste d'une fabrication relativement simple et économique. Une forme globalement verticale, c'est-à-dire de largeur réduite, notamment au plus égale à 70 mm, et de hauteur relativement importante, par exemple de 120 mm, serait avantageuse.

Selon l'invention, un projecteur pour véhicule automobile du genre défini précédemment est caractérisé par le fait que :
- le premier réflecteur ellipsoïdal est prévu principalement en arrière de la lampe à décharge ;
- une lentille d'axe optique parallèle à, ou confondu avec, celui du réflecteur ellipsoïdal est placée en avant de ce réflecteur, le foyer de la lentille étant voisin du foyer externe de ce premier réflecteur ;
- un deuxième réflecteur ellipsoïdal est prévu au-dessus de la lampe à décharge pour former une image de cette lampe qui constitue une source lumineuse secondaire virtuelle située en avant de la lampe à décharge, au voisinage du plan horizontal passant par l'axe géométrique de la lampe, et éclairant vers le bas,
- et un réflecteur verticalisé est disposé en partie basse pour produire, à partir du faisceau provenant de la source secondaire virtuelle, un faisceau de longue portée qui n'est pas intercepté par la lentille,
l'ensemble du premier réflecteur ellipsoïdal et de la lentille donnant un faisceau étalé de plus faible portée,
l'axe géométrique de la lampe à décharge (3) et l'axe optique du projecteur faisant un angle non nul.

Avantageusement, le premier et le second réflecteurs ellipsoïdaux, tout en ayant des caractéristiques optiques différentes, sont prévus pour être en continuité géométrique et former une seule pièce.

La lampe à décharge peut être disposée perpendiculairement à l'axe optique du projecteur. En variante, la lampe à décharge est disposée en oblique, notamment sous un angle compris entre 0 et 90° par rapport à l'axe optique du projecteur.

Généralement le projecteur comporte, pour le second réflecteur ellipsoïdal, un cache situé dans un plan horizontal au voisinage de la source secondaire virtuelle et présentant un bord rectiligne qui délimite une coupure nette du faisceau obtenu à partir de la source secondaire.

Le projecteur comporte, pour le premier réflecteur ellipsoïdal, un cache à orientation verticale situé au voisinage du foyer externe du premier réflecteur de manière que le faisceau lumineux sortant de la lentille soit essentiellement situé au-dessous d'un niveau déterminé. Ce cache vertical est avantageusement constitué par une portion de surface cylindrique à génératrices verticales tournant sa concavité vers l'avant.

Les deux caches peuvent être solidaires mécaniquement et ne former qu'une seule pièce.

Lorsque la lampe à décharge est disposée en oblique par rapport à l'axe optique, le cache situé dans le plan horizontal pour la source secondaire virtuelle présente un bord rectiligne orienté en oblique parallèlement à l'axe géométrique de la lampe pour délimiter une coupure nette du faisceau correspondant.

Le cache du second réflecteur ellipsoïdal peut être escamotable, par translation ou basculement, entre une position active correspondant à la fonction code (croisement) et une position escamotée correspondant à la fonction route. Une position intermédiaire dite « code autoroute » peut être prévue dans laquelle le cache du second réflecteur ellipsoïdal découvre un peu plus la source secondaire qu'en position « code » tout en continuant à l'occulter en partie.

Le projecteur peut comporter des moyens de déplacement du cache du second réflecteur ellipsoïdal pour lui faire occuper une position dite « cache vacancier », en particulier pour une circulation à gauche au lieu d'une circulation à droite.

Ces moyens de déplacement peuvent commander une rotation du cache secondaire entre deux positions inclinées différemment par rapport à l'axe optique. Selon une autre possibilité, deux caches secondaires sont prévus suivant des inclinaisons différentes par rapport à l'axe optique, ces caches étant distants l'un de l'autre mais solidaires, et les moyens de déplacement assurent une translation de l'ensemble des deux caches transversalement à l'axe optique pour placer l'un ou l'autre cache devant la source secondaire.

Le cache du premier réflecteur peut comporter, dans sa partie centrale, un volet qui peut passer d'une position escamotée à une position active où il surélève la zone centrale du bord supérieur du cache de manière à créer une fonction « code pluie » alors que la fonction code normal est obtenue lorsque ce volet est escamoté.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :
Fig.1 est une coupe schématique d'un projecteur selon l'invention selon un plan vertical passant par l'axe optique.
Fig.2 est une vue schématique suivant la ligne II-II de Fig.1.
Fig.3 est une coupe schématique suivant la ligne III-III de Fig.1.
Fig.4 est une représentation schématique, à échelle différente, d'une lampe à décharge.
Fig.5 est un schéma en perspective des deux caches ne formant qu'une seule pièce.
Fig.6 est une coupe horizontale schématique avec parties enlevées d'un exemple de réalisation du projecteur.
Fig.7 est une vue en plan, à plus grande échelle, du cache associé à la source virtuelle avec des courbes isolux de cette source dans le plan du cache.
Fig.8 montre, semblablement à Fig.6, une variante de réalisation avec lampe à décharge inclinée par rapport à l'axe optique.
Fig.9 montre, semblablement à Fig.7, le cache associé au second réflecteur ellipsoïdal pour la réalisation de Fig.8.
Fig.10 est une coupe schématique verticale partielle du projecteur selon l'invention assurant la fonction code.
Fig.11 montre, semblablement à Fig.10, le projecteur assurant la fonction route avec cache horizontal escamoté par translation.
Fig.12 montre, semblablement à Fig.10, une variante de réalisation avec cache horizontal à volet basculant, en fonction code.
Fig.13 montre le projecteur de Fig.12 en fonction route avec cache escamoté par basculement.
Fig.14 est une vue schématique de dessus du cache et du réseau de courbes isolux de la source secondaire, en position code.
Fig.15 montre, semblablement à Fig.14 le cache et le réseau d'isolux en position route du projecteur.
Fig.16 est une vue de dessus du cache associé au second réflecteur ellipsoïdal, le cache étant en position « code » et recouvrant une partie du réseau d'isolux d'une lampe à décharge axiale.
Fig.17 montre, semblablement à Fig.16, un cache oblique en position code, avec lampe axiale.
Fig.18 montre le cache oblique déplacé en position route pour découvrir l'ensemble du réseau d'isolux.
Fig.19 montre semblablement à Fig.17 le cache oblique déplacé en position « code autoroute ».
Fig.20 montre, semblablement à Fig.17, le cache en position « cache vacancier », toujours pour une lampe axiale.
Fig.21 montre une variante de réalisation du cache en position code pour une lampe axiale.
Fig.22 montre, semblablement à Fig.21, le cache déplacé en translation en position cache vacancier.
Fig.23 montre, en plan, le cache en position code normal avec une lampe transversale.
Fig.24 montre schématiquement le cache en position code autoroute par rapport à Fig.23.
Fig.25 est une vue schématique en coupe verticale partielle du cache associé au premier réflecteur ellipsoïdal avec volet en position rabattue.
Fig.26 est une vue de droite par rapport à Fig.25.
Fig.27 montre, semblablement à Fig.25, le cache avec volet relevé en position active.
Fig.28 est une vue de droite par rapport à Fig.27.
Fig.29 montre, semblablement à Fig.25, une variante de réalisation avec volet mobile en translation, en position escamotée, et
Fig.30 montre, semblablement à Fig.29, le cache avec volet en position active.

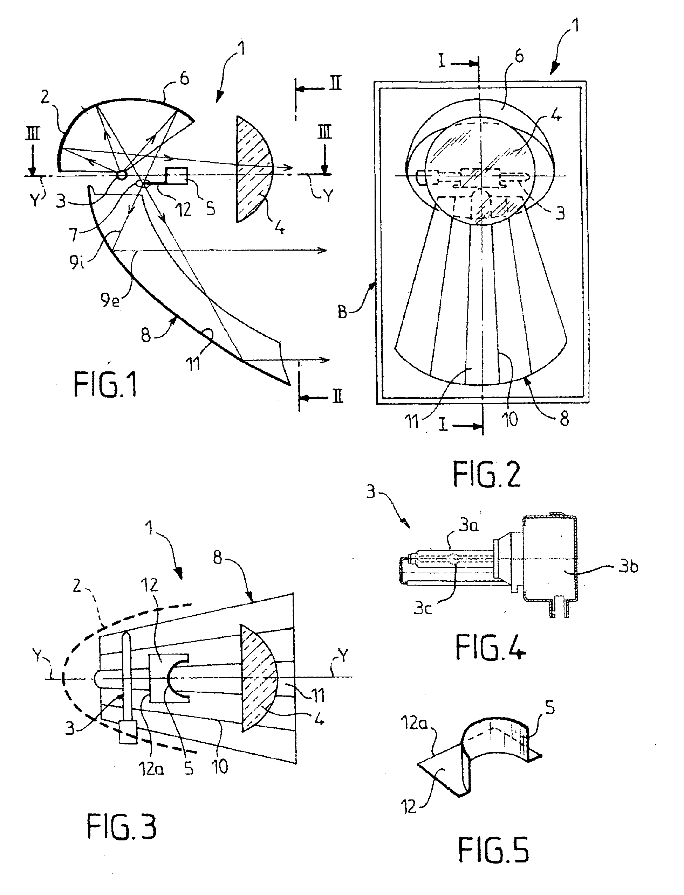

En se reportant aux Figs.1 à 3, on peut voir un projecteur 1 pour véhicule automobile comportant un premier réflecteur 2 de type ellipsoïdal et une source lumineuse formée par une lampe à décharge 3 placée au voisinage du foyer interne du réflecteur 2.

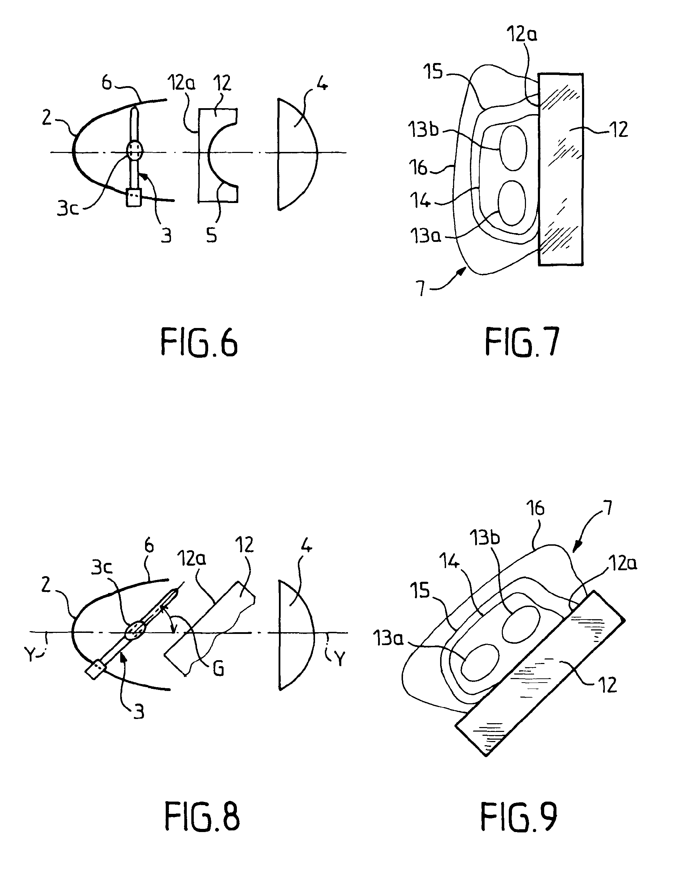

La lampe à décharge 3 est représentée sur Fig.4. Elle comporte une enveloppe cylindrique allongée 3a transparente, en verre ou en quartz, et un culot 3b à une extrémité de l'enveloppe. Deux électrodes reliées respectivement à des broches du culot 3b sont prévues dans l'enveloppe qui contient un gaz rare, généralement du xénon. Les électrodes, ainsi que leur alimentation, sont prévues pour produire une décharge dans une zone 3c située sensiblement à mi-longueur de l'enveloppe et dans laquelle se trouvent des sels, par exemple minéraux sur un support. Le rayonnement lumineux produit par la décharge s'effectue essentiellement du côté opposé au support des sels.

La lampe à décharge 3 est montée dans le projecteur 1 avec son axe géométrique situé dans un plan horizontal. La lampe 3 est disposée de manière à émettre de la lumière essentiellement vers le haut. Dans l'exemple de Figs.1 à 3, la lampe 3 est disposée transversalement, avec son axe géométrique orthogonal à l'axe optique Y-Y du projecteur. L'axe géométrique de la lampe 3 est donc orthogonal au plan de Fig.1.

Par réflecteur « ellipsoïdal » on désigne un réflecteur dont la surface est définie à partir de deux foyers, respectivement un foyer interne et un foyer externe, cette surface se rapprochant d'un ellipsoïde.

Le premier réflecteur ellipsoïdal 2 est prévu principalement en arrière de la lampe à décharge et forme une sorte de coque dont la base ouverte est située au voisinage du plan horizontal passant par l'axe géométrique de la lampe 3. Le réflecteur 2 est ouvert vers l'avant et son bord supérieur est de préférence situé en arrière du plan vertical passant par le centre de la lampe 3. Le réflecteur 2 est prévu pour recueillir la majeure partie du flux lumineux émis par la lampe 3 vers l'arrière.

Une lentille 4 convergente, d'axe optique sensiblement parallèle à, ou confondu avec, celui du réflecteur 2 est placée en avant de ce réflecteur. Le foyer de la lentille 4 est voisin du foyer externe du réflecteur. De préférence, le foyer de la lentille 4 se trouve en arrière, c'est-à-dire plus proche du réflecteur 2, que le foyer externe de ce réflecteur. Ceci contribue à la diminution de la profondeur d'ensemble du projecteur et à l'étalement du faisceau. L'axe optique de la lentille 4 peut en outre être plus bas que celui du réflecteur 2 pour une récupération optimale du flux lumineux provenant du réflecteur 2.

Le projecteur 1 est prévu pour assurer la fonction code (faisceau de croisement). Pour que le faisceau lumineux provenant du réflecteur 2 et formé par la lentille 4 soit situé au-dessous d'un plan horizontal, un premier cache 5 est disposé au voisinage du foyer externe du réflecteur 2. Ce cache 5 est constitué par une plaquette opaque verticale, maintenue par tout moyen approprié non représenté. Du fait de la courbure du champ, le cache 5 est formé, de préférence, par une portion de surface cylindrique à génératrices verticales tournant sa concavité vers l'avant, c'est-à-dire vers la droite selon Fig.1.

Le bord supérieur du cache 5 définit la ligne de coupure au-dessous de laquelle se situe le faisceau lumineux par suite de l'inversion créée par la lentille 4.

L'ensemble du réflecteur 2, du cache 5 et de la lentille 4 est prévu pour réaliser un faisceau lumineux à coupure et de grande largeur, par exemple un faisceau de type antibrouillard.

Le projecteur 1 comprend en outre un deuxième réflecteur ellipsoïdal 6 prévu au-dessus de la lampe à décharge 3 et formant une coque ouverte vers le bas et vers l'avant. Ce deuxième réflecteur 6 est prévu pour former, de la lampe 3, une image 7 qui constitue une source lumineuse secondaire virtuelle située en avant de la lampe à décharge 3. Généralement, cette source secondaire 7 est située à un niveau inférieur de quelques millimètres à celui de la lampe 3.

Le deuxième réflecteur 6 permet de récupérer une partie importante du flux lumineux issu de la lampe 3 et de renvoyer les rayons lumineux globalement vers le bas.

Un réflecteur verticalisé 8 est disposé en partie basse du projecteur 1, au-dessous de la source secondaire virtuelle 7 et de la lampe à décharge 3. L'intersection de ce réflecteur 8 par un plan vertical passant par l'axe optique du projecteur 1 est constituée par un arc de courbe voisin d'un arc de parabole ayant un foyer voisin de la source secondaire 7. Plus généralement, la surface du réflecteur 8 est déterminée de telle sorte qu'un rayon lumineux tel que 9i provenant de la source secondaire 7 soit réfléchi en 9e suivant une direction sensiblement parallèle à l'axe optique du projecteur. Le réflecteur 8 est prévu pour donner des images de la source 7 à une distance de plusieurs dizaines de mètres du projecteur.

En outre, le réflecteur verticalisé 8 est prévu pour concentrer le faisceau qu'il réfléchit dans un angle d'ouverture relativement réduit, par exemple au plus égal à ± 20° de part et d'autre de l'axe optique Y-Y. De préférence, le réflecteur 8 comporte des stries 10 déterminant au moins cinq facettes, à savoir une facette centrale 11 formée par une portion de surface cylindrique dont les génératrices sont horizontales et perpendiculaires au plan de Fig.1, et de chaque côté de la facette centrale 11, deux facettes latérales légèrement repliées vers le plan vertical longitudinal médian.

Le boîtier B du projecteur, schématisé sur Fig.2, présente un contour rectangulaire, plus haut que large. A titre d'exemple non limitatif, la largeur peut être réduite à environ 70 mm tandis que la hauteur est de l'ordre de 120 mm. La profondeur du projecteur, suivant une direction orthogonale au plan de Fig.2, est inférieure à 100 mm.

L'arc créé dans la lampe à décharge 3 a généralement un contour en arc de courbe dont les limites ne sont pas très nettes. Il en résulte que la source secondaire 7 a des limites qui ne sont pas très nettes. Pour créer un bord net de cette source secondaire 7, on dispose un deuxième cache 12 dans le plan horizontal moyen de la source secondaire 7. Ce cache 12 est formé, par exemple, par une plaquette horizontale opaque de forme sensiblement rectangulaire dont le bord arrière 12a qui délimite la coupure est rectiligne. Le cache 12 est disposé de manière à occulter une part aussi faible que possible de l'éclairement donné par la source secondaire 7, tout en assurant le bord de coupure rectiligne. Fig.7 illustre, en plan, la disposition du cache 12 avec des courbes isolux 13a, 13b, 14, 15, 16 de la source secondaire 7. Les deux courbes fermées 13a, 13b d'éclairement maximum, en forme d'ovale, correspondent aux images de deux points d'intensité lumineuse maximale de la lampe 3. Les courbes 14, 15, 16 correspondent à des éclairements de moins en moins forts. Sur Fig.7, le bord arrière 12a du cache coupe l'avant des lignes 14, 15 et 16.

Le réflecteur verticalisé 8 est conçu pour assurer un faisceau de type code avec une faible épaisseur et une répartition de lumière essentiellement dans l'axe du projecteur, pour assurer la portée du faisceau.

De préférence, la distance focale de chaque réflecteur 2, 6, l'agencement et la position de ces réflecteurs l'un par rapport à l'autre sont conçus de telle façon que les miroirs 2 et 6, malgré leurs propriétés optiques différentes, puissent être réunis mécaniquement et ne former qu'une seule pièce. La séparation fictive entre les miroirs 2 et 6 est symbolisée sur Fig.1 par un petit trait à l'intersection des miroirs.

Les caches 5 et 12 sont avantageusement prévus pour ne former également qu'une seule pièce schématisée en perspective sur Fig.5.

Le fonctionnement du projecteur 1 est le suivant.

Lorsque la lampe à décharge 3 est allumée, le premier réflecteur ellipsoïdal 2 produit un faisceau à coupure horizontale de portée réduite mais de grande largeur, permettant d'éclairer les bas-côtés.

Le faisceau produit par le réflecteur verticalisé 8 est plus concentré, avec une ligne de coupure en V sensiblement à l'horizontale à gauche de l'axe optique et montant vers la droite suivant une branche inclinée à 15° sur l'horizontale, pour une circulation à droite.

Le projecteur 1 avec lampe à décharge 3 orientée transversalement est représenté partiellement et schématiquement en coupe horizontale sur Fig.6.

L'orientation transverse de la source 3 est liée à la recherche d'images horizontales pour former la coupure du faisceau. Toutefois, l'orientation optimale des images, pour un faisceau code, est l'angle de 15° avec l'horizontale correspondant à l'angle formé par la coupure oblique sur le côté droit, pour une circulation à droite.

On peut conserver un faisceau de qualité en tournant la lampe 3 dans son plan horizontal, de façon à se rapprocher de la configuration d'une lampe axiale. L'angle optimal G (Fig.8) entre l'axe de la lampe 3 et l'axe optique Y-Y est de 15° pour un faisceau code. Toutefois, des images intéressantes sont obtenues pour un angle G pouvant aller jusqu'à 45°. La partie centrale 3c de la lampe 3 reste sur l'axe optique Y-Y ou dans le plan vertical longitudinal passant par cet axe optique.

Le bord arrière rectiligne 12a du cache 12 est soumis à la même rotation que la lampe 3 comme illustré sur Figs.8 et 9. Le bord de l'image secondaire est également tourné de 15°. La cohérence entre l'angle d'inclinaison du cache 12 et de la source 3 permet de ne pas perdre de flux lumineux, comme il apparaît en comparant Fig.9 et Fig.7.

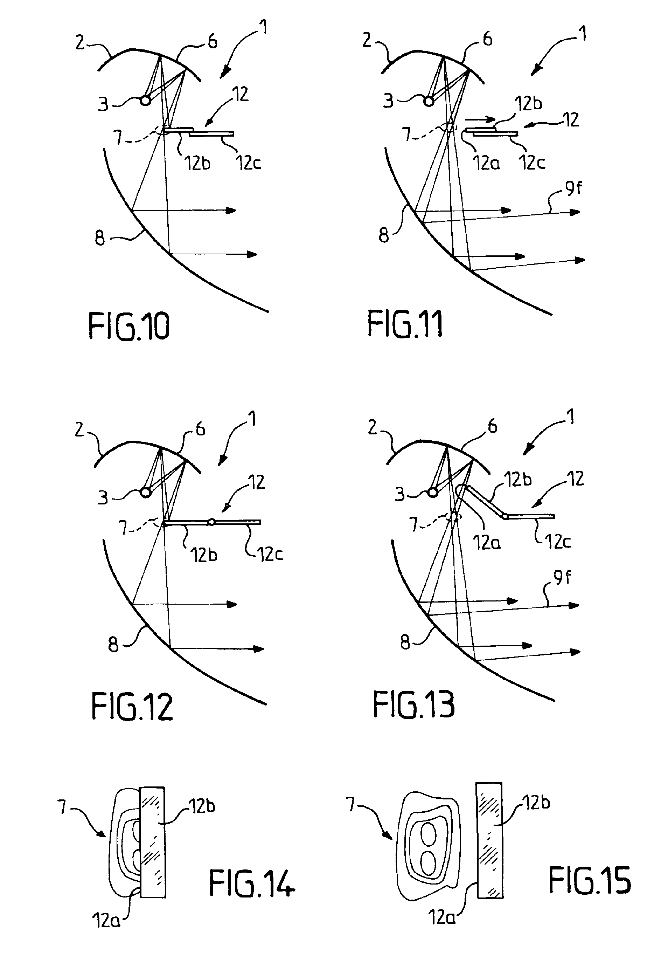

Les Figs.10 et 11 montrent schématiquement, en partie seulement, un exemple de réalisation dans lequel le deuxième cache 12 peut être escamoté, ce qui permet un apport de lumière dans le faisceau lumineux, au-dessus de la ligne de coupure. On peut ainsi passer de la fonction code lorsque le cache 12 est en position active (Figs.10 et 12) à une fonction route (Figs.11 et 13).

Plus précisément, selon Figs.10 et 11, le cache 12 est constitué de deux parties 12b, 12c, par exemple rectangulaires, dont les grands côtés sont perpendiculaires au plan des Figs.10 et 11. La partie 12b est montée coulissante sur la partie 12c qui est fixe. Des moyens, non représentés, sont prévus pour permettre de faire coulisser la partie 12b de la position active de Fig.10 à la position escamotée de Fig.11 et inversement.

Dans sa position active, la partie 12b intercepte une fraction du faisceau lumineux renvoyé par le réflecteur 6 de sorte que le faisceau produit par le réflecteur verticalisé 8 assure une fonction code avec une coupure.

Lorsque la partie 12b est déplacée en translation vers l'avant, la source secondaire formée par l'image 7 n'est plus occultée. Des rayons lumineux supplémentaires tels que 9f sur Fig.11, dirigés vers le haut, permettent de transformer le faisceau lumineux en un faisceau route.

Les Figs. 12 et 13 montrent une variante de réalisation selon laquelle la partie 12b du cache est reliée, suivant son bord longitudinal voisin de la partie 12c, par une articulation à cette partie 12c. Des moyens non représentés sont prévus pour commander le basculement de la partie 12b de la position active illustrée sur Fig.12 à la position escamotée de Fig.13. Comme pour les Figs.10 et 11, on passe ainsi de la fonction code (Fig.12) à la fonction route (Fig.13).

L'occultation réalisée par la partie 12b en position active est illustrée en plan sur Fig.14 avec une représentation des isolux de la source secondaire 7. Fig.14 illustre la situation en fonction code.

Pour la simplification des Figs.10 à 13, la lentille 4 et le cache 5 n'ont pas été représentés mais, bien entendu, ils demeurent présents dans tous les exemples de réalisation.

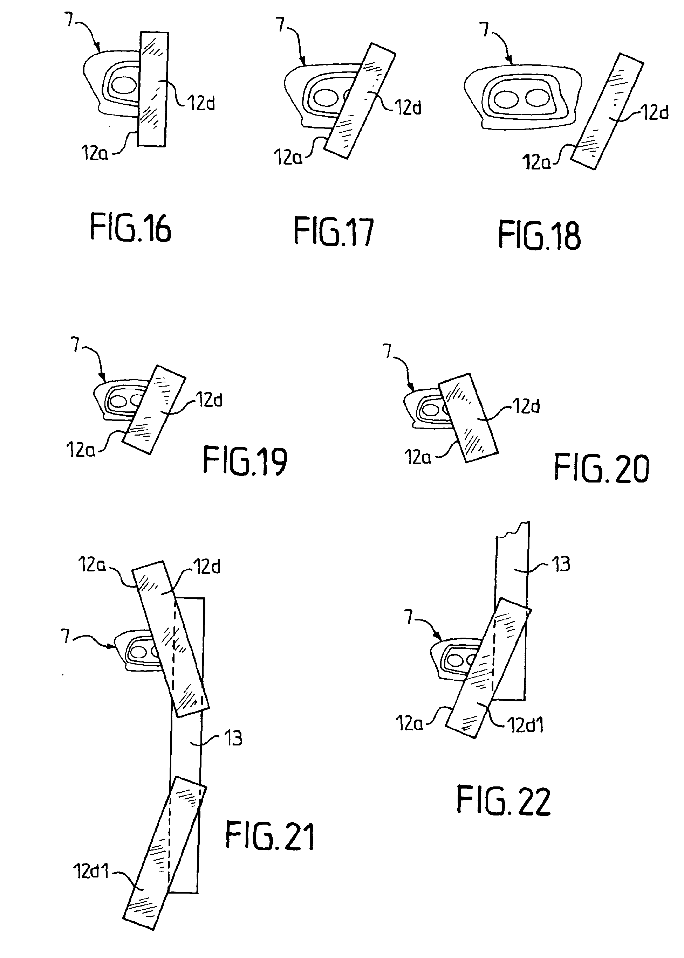

Fig.15 montre, semblablement à Fig.14, la partie 12b escamotée, pour la fonction route.

Dans le cas du concept bifonction des Figs.10 à 13, l'éclairement donné par le réflecteur 6 dans le plan du cache 12 est plus occulté, dans la position code, que dans le cas d'un concept monofonction. L'augmentation de l'occultation apparaît en comparant la Fig.14 aux Figs.7 et 9. En effet, dans le cas d'un projecteur bifonction, il faut que le passage en fonction route s'accompagne d'un gain de flux lumineux sensible.

Fig.14 montre qu'avec un projecteur bifonction, la position du cache en fonction code n'est pas la même qu'avec un projecteur monofonction. La taille des images de la source secondaire 7 se trouvera donc réduite.

Il est alors possible de disposer la lampe à décharge 3 avec son axe géométrique parallèle à l'axe optique Y-Y et d'utiliser un cache 12d transverse comme illustré sur Fig.16, ou tourné de 15 à 45° comme illustré sur Fig.17, sans risque d'avoir des images de trop grande taille.

L'éclairement assuré par la source secondaire 7 axiale dans le plan du cache est illustré sur Figs.16 à 18.

Fig.16 correspond à la position code d'un cache transverse 12d tandis que Fig.17 correspond à la position code pour un cache tourné de 15° par rapport à la transversale.

Fig.18 illustre la fonction route, le cache 12d a été déplacé et il n'y a plus d'occultation de l'éclairement de la source secondaire 7.

Fig.19 montre, semblablement à Fig.17,le cache horizontal 12d et les courbes isolux de la source secondaire 7 axiale. Par un mouvement mécanique et des moyens non représentés, le cache 12d sur Fig.19 a été déplacé en translation par rapport à la position de Fig.17, de manière à libérer plus de lumière tout en laissant une coupure du faisceau. La position du cache 12d sur Fig.19 correspond à une position « code autoroute » qui permet d'augmenter la portée du faisceau tout en laissant une coupure et ainsi d'assurer une fonction code mieux adaptée à des conditions de conduite sur autoroute.

Il peut arriver que le véhicule équipé pour un type de circulation, par exemple circulation à droite, soit introduit dans un pays à circulation opposée, par exemple circulation à gauche. Des moyens (non représentés) sont avantageusement prévus pour faire tourner le cache 12d dans son plan, par exemple d'un angle de 30°. La position du cache 12d, après cette rotation, est illustrée sur Fig.20 et correspond à une position « cache vacancier » qui permet de masquer la source de manière convenable pour une circulation du côté opposé à celui correspondant à Fig.19.

Les Figs.21 et 22 montrent une variante de réalisation, avec lampe axiale, suivant laquelle le passage de la position code normal (Fig.21) avec cache tourné de 15° dans un sens, à la position « cache vacancier » avec cache tourné de 15° dans l'autre sens est obtenu par une translation suivant une direction orthogonale à l'axe géométrique de la lampe.

Le cache 12d pour code normal est fixé à une barrette 13 montée mobile en translation suivant une direction orthogonale à l'axe optique. Un autre cache 12d1 semblable à 12d, mais symétrique de celui-ci par rapport à une direction orthogonale à la longueur de la barrette 13, est également fixé à cette barrette à une certaine distance de 12d. Des moyens (non représentés) sont prévus pour commander le déplacement de la barrette 13 en translation suivant sa direction longitudinale de manière, lorsqu'on le souhaite, à amener devant la source 7 le cache 12d (Fig.21), ou le cache 12d1 (Fig.22). Si la position de Fig.21 correspond à un code pour circulation à droite, Fig.22 correspond à un code pour circulation à gauche ou position « cache vacancier ».

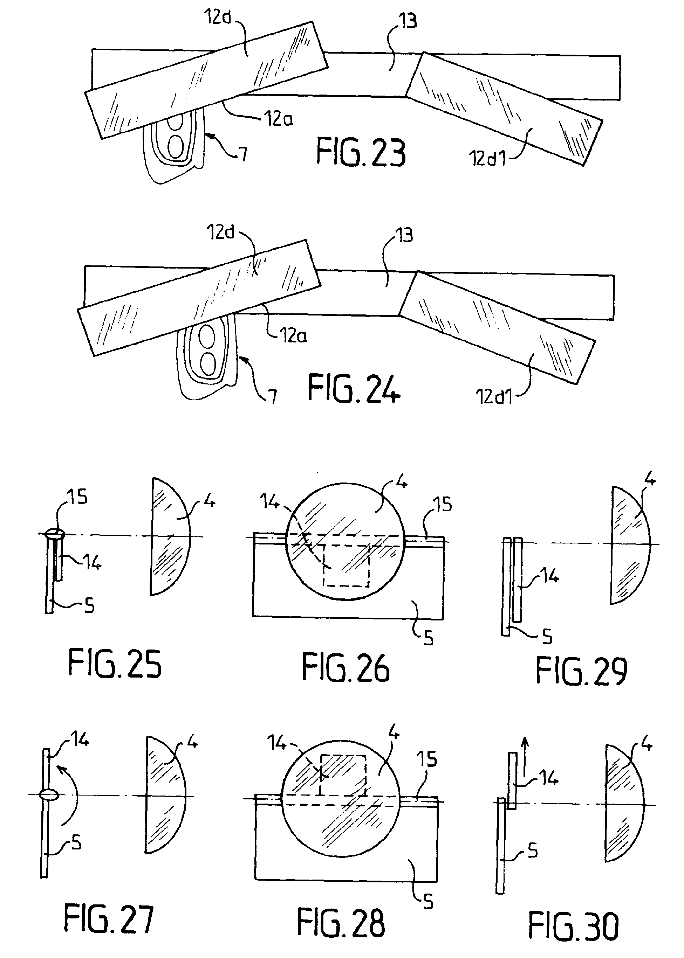

Fig.23 est un schéma du cache 12d, vu de dessus, fixé sur une barrette 13 et coopérant avec une source secondaire transversale 7 dont les isolux sont représentées occultées en partie pour la position code normal. Le bord 12a du cache déterminant la coupure est incliné à 15° par rapport à la direction de l'axe optique.

Fig.24 montre les positions relatives du cache 12d et des lignes isolux de la source 7 après un déplacement relatif en translation entre la barrette 13 et la source 7, de manière à découvrir un peu plus la source 7 tout en laissant une coupure. La position de Fig.24 correspond à la fonction code autoroute. Pour simplifier le dessin, la source 7 sur Fig.24 a été déplacée vers la droite par rapport à Fig.23, alors que la barrette 13 n'a pas bougé ; en réalité, pour passer de la configuration de Fig.23 à Fig.24,1a source 7 ne bougera pas, tandis que la barrette 13 sera déplacée vers la gauche.

Le code autoroute sera donc obtenu en tirant légèrement le cache vers la gauche, si on utilise le cache 12d situé sur la gauche, et en tirant le cache vers la droite si on utilise un cache tel que 12d1 situé à droite.

On peut prévoir une fonction dite « code pluie » qui permet d'adapter le faisceau code à la pluie. Cette adaptation vise principalement à diminuer la lumière proche, en avant du véhicule, sans diminuer la largeur du faisceau.

A cette fin, comme illustré sur Fig.25 à Fig.28, le premier cache 5 comporte, dans sa partie centrale, un volet 14 qui peut être mis en position active (Figs.27 et 28) où il surélève la zone centrale du bord supérieur du cache 5 pour une position « code pluie », ou être escamoté (Figs.25-26) pour une position code normal.

Selon l'exemple de réalisation des Figs.25 et 27, le volet 14 est relié au bord supérieur du volet 5 par une articulation 15. Un moyen (non représenté) est prévu pour faire passer le volet 14 de la position escamotée, suivant laquelle le volet 14 est rabattu devant le cache 5, à la position active de Fig.27 où le volet 14 est relevé dans le plan du cache 5 au-dessus de son bord supérieur horizontal.

Figs.29 et 30 illustrent une variante de réalisation selon laquelle le volet 14 est monté coulissant en translation verticale devant le cache 5. Le passage de la position escamotée (Fig.29) à la position active (Fig.30) du volet 14 est obtenu par une translation verticale en agissant sur un moyen prévu à cet effet. Les vues de droite par rapport à Figs.29 et 30 correspondent à Figs.26 et 28.

Par rapport à un système optique entièrement elliptique, l'invention permet de réduire de manière sensible la profondeur du système. La portée du faisceau lumineux est améliorée sans que sa largeur soit diminuée, notamment pour assurer un bon éclairage des bas-côtés.

Lorsque la lampe à décharge est tournée dans son plan par rapport à l'axe optique, notamment de 45°, les possibilités d'accès à la lampe sont nettement améliorées pour le montage et le changement de cette lampe. Le flux lumineux est optimisé du fait que la distance entre la source lumineuse, qui se situe sensiblement à mi-longueur de la lampe à décharge, et le trou de fond du réflecteur ellipsoïdal est plus faible quand on tourne la lampe dans son plan. Ceci autorise un trou de fond plus petit et donc une plus grande récupération du flux lumineux. En outre, la zone d'ombre dans la direction de l'axe géométrique de la lampe ne tombe plus dans la surface optique, ce qui permet de collecter davantage de flux.

D'une manière générale pour la partie haute du projecteur constituée par le réflecteur 2, le cache 5 et la lentille 4, on préfère une situation de lampe axiale ou proche d'une direction axiale, qui permet d'optimiser le flux récupéré. Par rapport à une surface complexe avec lampe xénon, les risques d'éblouissement sont plus faibles.

Par rapport à un projecteur elliptique, le projecteur de l'invention présente l'avantage de ne pas présenter ou de présenter peu de chromatisme avec une coupure qui n'est ni trop floue ni trop nette. Les moyens pour adapter le faisceau à différentes conditions de conduite : autoroute, cache vacancier, code pluie, sont simples.

## Revendications

1. Projecteur, pour véhicule automobile, comportant un premier réflecteur (2), de type ellipsoïdal, et une source lumineuse (3) formée par une lampe à décharge placée au voisinage du foyer interne de ce réflecteur, l'axe géométrique de la lampe à décharge étant situé dans un plan horizontal et la lampe étant disposée de manière à émettre de la lumière essentiellement vers le haut, **caractérisé par le fait que** :
- le premier réflecteur ellipsoïdal (2) est prévu principalement en arrière de la lampe à décharge (3) ;
- une lentille (4) d'axe optique parallèle à, ou confondu avec, celui du réflecteur ellipsoïdal est placée en avant de ce réflecteur, le foyer de la lentille étant voisin du foyer externe de ce premier réflecteur ;
- un deuxième réflecteur ellipsoïdal (6) est prévu au-dessus de la lampe à décharge (3) pour former une image de cette lampe qui constitue une source lumineuse secondaire virtuelle (7) située en avant de la lampe à décharge, au voisinage du plan horizontal passant par l'axe géométrique de la lampe, et éclairant vers le bas,
- et un réflecteur verticalisé (8) est disposé en partie basse pour produire, à partir du faisceau provenant de la source secondaire virtuelle (7), un faisceau de longue portée qui n'est pas intercepté par la lentille (4), l'ensemble du premier réflecteur ellipsoïdal (2) et de la lentille (4) donnant un faisceau étalé de plus faible portée,
- l'axe géométrique de la lampe à décharge (3) et l'axe optique du projecteur faisant un angle non nul.

2. Projecteur selon la revendication 1, **caractérisé par le fait que** le premier (2) et le second (6) réflecteurs ellipsoïdaux, tout en ayant des caractéristiques optiques différentes, sont prévus pour être en continuité géométrique et former une seule pièce.

3. Projecteur selon la revendication 1 ou 2, **caractérisé par le fait que** la lampe à décharge (3) est disposée perpendiculairement à l'axe optique du projecteur.

4. Projecteur selon la revendication 1 ou 2, **caractérisé par le fait que** la lampe à décharge (3) est disposée en oblique par rapport à l'axe optique du projecteur.

5. Projecteur selon la revendication 4, **caractérisé par le fait que** la lampe à décharge (3) est disposée sous un angle (G) de 0° à 90° par rapport à l'axe optique du projecteur.

6. Projecteur selon l'une quelconque des revendications précédentes, **caractérisé par le fait qu'**il comporte, pour le second réflecteur ellipsoïdal (6), un cache (12, 12b, 12d, 12d1) situé dans un plan horizontal au voisinage de la source secondaire virtuelle et présentant un bord rectiligne arrière (12a) qui délimite une coupure nette du faisceau obtenu à partir de la source secondaire (7).

7. Projecteur selon l'une quelconque des revendications précédentes, **caractérisé par le fait qu'**il comporte, pour le premier réflecteur ellipsoïdal (2), un cache (5) à orientation verticale situé au voisinage du foyer externe du premier réflecteur (2) de manière que le faisceau lumineux sortant de la lentille (4) soit essentiellement situé au-dessous d'un niveau déterminé.

8. Projecteur selon la revendication 7, **caractérisé par le fait que** le cache vertical (5) est constitué par une portion de surface cylindrique à génératrices verticales tournant sa concavité vers l'avant.

9. Projecteur selon l'ensemble des revendications 6 et 7, **caractérisé par le fait que** les deux caches (5,12) peuvent être solidaires mécaniquement et ne former qu'une seule pièce.

10. Projecteur selon l'ensemble des revendications 6 et 7, **caractérisé par le fait que** les premier et deuxième réflecteurs ellipsoïdaux et le réflecteur verticalisé (2, 6, 8) peuvent être solidaires mécaniquement et ne former qu'une seule pièce.

11. Projecteur selon l'ensemble des revendications 4 et 6, **caractérisé par le fait que** le cache (12, 12d, 12d1) situé dans le plan horizontal pour la source secondaire virtuelle (7) présente un bord rectiligne arrière (12a) orienté en oblique parallèlement à l'axe géométrique de la lampe pour délimiter une coupure nette du faisceau correspondant.

12. Projecteur selon la revendication 6 ou 11, **caractérisé par le fait que** le cache (12, 12b, 12d) du second réflecteur ellipsoïdal (6) est escamotable, par translation ou basculement, entre une position active correspondant à la fonction code (croisement) et une position escamotée correspondant à la fonction route.

13. Projecteur selon la revendication 12, **caractérisé par le fait qu'**une position intermédiaire dite « code autoroute » est prévue dans laquelle le cache (12d) du second réflecteur ellipsoïdal découvre un peu plus la source secondaire (7) qu'en position « code » tout en continuant à l'occulter en partie.

14. Projecteur selon la revendication 6, **caractérisé par le fait que** le cache (12d, 12d1) du second réflecteur ellipsoïdal (6) peut occuper une position dite « cache vacancier », en particulier pour une circulation à gauche au lieu d'une circulation à droite.

15. Projecteur selon la revendication 14, **caractérisé par le fait que** le cache secondaire (12d) peut être déplacé entre deux positions inclinées différemment par rapport à l'axe optique.

16. Projecteur selon la revendication 14, **caractérisé par le fait que** deux caches secondaires (12d, 12d1) sont prévus suivant des inclinaisons différentes par rapport à l'axe optique, ces caches étant distants l'un de l'autre mais solidaires, et qu'une translation de l'ensemble des deux caches transversalement à l'axe optique permet de placer l'un (12d) ou l'autre (12d1) cache devant la source secondaire.

17. Projecteur selon la revendication 5, **caractérisé par le fait que** le cache (5) du premier réflecteur (2) comporte, dans sa partie centrale, un volet (14) qui peut passer d'une position escamotée à une position active où il surélève la zone centrale du bord supérieur du cache (5) de manière à créer une fonction « code pluie » alors que la fonction code normal est obtenue lorsque ce volet (14) est escamoté.
